# FASCICULE DE BREVET EUROPEEN

(11) **EP 0 632 922 B1**
(45) Date de publication et mention de la délivrance du brevet: **13.11.1996**
(21) Numéro de dépôt: 93902280.2
(22) Date de dépôt: 02.12.1992
(51) Int. Cl.: G11B 20/00, G11B 7/00, G11B 27/10, G03B 31/04

(54) **DISPOSITIF HAUTE FIDELITE DE REPRODUCTION DU SON AU CINEMA**
VORRICHTUNG ZUR WIEDERGABE VON FILMTON IN HiFi-QUALITÄT
HIGH FIDELITY SOUND REPRODUCTION DEVICE FOR CINEMATOGRAPHIC FILMS

(30) Priorité: 03.12.1991 FR 9114963
(43) Date de publication de la demande: 11.01.1995
(73) Titulaire: Digital Theater Systems, L.P., Westlake Village, CA 91362 (US)
(72) Inventeur: CHEDEVILLE, Pascal, F-92400 Courbevoie (FR)
(74) Mandataire: Schmit, Christian Norbert Marie
(86) Numéro de dépôt international: FR9201130
(87) Numéro de publication internationale: WO9311536

(56) Documents cités:
- EP-A- 0 204 578
- EP-A- 0 372 155
- WO-A-90/14614
- WO-A-91/16709
- FR-A- 2 594 238
- US-A- 4 839 733
- JOURNAL OF THE BRITISH KINEMATOGRAPH SOCIETY. vol. 67, no. 9, September 1985, LONDON GB pages 538 - 543 SMITH 'A Three Solid State Sound Store'
- ELECTRONICS & WIRELESS WORLD. vol. 93, no. 1601, March 1986, SUTTON GB pages 29 - 32 WATKINSON 'Digital Audio Editing'

## Description

La présente invention a pour objet un dispositif haute de fidélité de reproduction du son pour le cinéma. Elle a pour objet d'augmenter la qualité du son qui accompagne les images de films que l'on regarde.

Actuellement, les films de cinéma comportent une bande son et une bande image placées, l'une à coté de l'autre, sur la bande du film. Elles sont lues à la fois par un détecteur de son et par un détecteur d'image qui sont séparés. Ceci permet au détecteur de son, comportant une lampe de faible intensité, de lire correctement la bande son sans être gêné par l'éclairement puissant du détecteur d'image. En général, le détecteur de son est placé en aval du détecteur d'image par rapport au sens du défilement du film. Ce qui implique d'utiliser des films dont la bande son est décalée (d'une hauteur L) par rapport à la bande image. C'est à dire qu'au niveau de l'image N, on est en présence du son N+L.

Ce décalage pose un problème lors d'une déchirure ou coupure de film notamment réalisée pour des raisons d'exploitation dans la salle de cinéma où le film est projeté. En coupant un morceau de bande, entre l'image N et l'image N+D (D pour déchirure), on détruit la partie de la bande son correspondant aux sons compris entre N+L et N+L+D. L'absence de sons correspondant à des images existantes et le maintien de certains sons correspondant à des images maintenant disparues provoquent un effet désagréable lors de la diffusion du film.

Pour pallier ce problème, le document WO/9014614 propose d'utiliser un autre support du son, par exemple désagréable lors de la diffusion du film.

Pour pallier ce problème, le document WO/9014614 propose d'utiliser un autre support du son, par exemple un disque laser. Le disque laser est synchronisé avec le déroulement du film grâce à un codage placé sur la bande son du film, appelé signal de synchronisation. On lit ce signal à l'aide d'un détecteur, appelé détecteur de signal de synchronisation. Ce détecteur est placé en amont du détecteur d'image par rapport au sens du défilement du film. Ce qui implique d'utiliser des films dont le signal de synchronisation est décalé (d'une hauteur H) par rapport à la bande image. C'est à dire qu'au niveau de l'image N, on est en présence de l'adresse son N-H.

On effectue la lecture du disque laser en avance par rapport à celle de l'image. C'est à dire que lors de la projection sur l'écran de l'image N, on lit sur le disque le son N+M. Les sons N à N+M sont stockés d'avance dans une mémoire. Simultanément à la projection de l'image N, on lit le son N stocké préalablement dans la mémoire pour le diffuser. Selon l'enseignement de ce document, lors d'une coupure de D images (les images N+1 à N+D ayant été enlevées), un pointeur adresse non pas la case mémoire correspondant au son N+1 mais celle correspondant au son N+D+1. On ignore donc les sons compris entre N+1 et N+D et enregistrés auparavant dans la mémoire. Ainsi, la coupure provoque un saut du pointeur (de N+1 à N+D+1). La diffusion du son respecte ainsi la projection des images.

Un problème sérieux se pose néanmoins si la coupure est importante. En effet, plus elle est grande, plus on saute de cases mémoire dans la mémoire. Pouvoir effectuer des coupures importantes impliquerait donc l'utilisation de grosses mémoires. Or, essentiellement pour des raisons de coût, ceci est impossible. En effet, en utilisant, par exemple, un échantillonnage son du signal analogique à 48KHz, on doit stocker par seconde 48 000 mots de 16 bits. Ainsi, pour une coupure de bande d'une durée de seulement dix secondes, il faut déjà utiliser des mémoires de 480 kilomots. Ceci est déraisonnable si l'on veut maintenir un prix abordable.

Pour résoudre ce problème, dans la présente invention, on a eu l'idée d'utiliser d'une part des moyens de compression et de décompression du son et d'autre part un système de gestion permettant, si la coupure est trop grande, d'éviter de lire sur le support (le disque laser par exemple) des sons correspondant aux images enlevées du film. D'une part, on comprime donc le son lu sur le disque. On le stocke dans une mémoire sous la forme comprimée.

Ceci permet de réduire la taille de la mémoire. Puis on le décomprime à la sortie de la mémoire afin qu'il puisse être émis. D'autre part, si la coupure nécessite malgré tout un saut supérieur à la taille de la mémoire, on évite de lire sur le disque des sons correspondant aux images enlevées, pour ne pas gaspiller de la place dans la mémoire. De préférence, dans l'invention, on comprime et on prévoit de sauter en même temps.

Ainsi l'invention a pour objet un dispositif de reproduction du son haute fidélité d'un film sonorisé de cinéma, au cours de la projection de ce film, comportant:
- un système de lecture du son sur un support autre que le film,
- un système de diffusion du son,
- une mémoire intermédiaire,
- un premier pointeur d'adresse permettant, lors du stockage du son dans des cases mémoires de cette mémoire intermédiaire, de connaître la position d'une case mémoire qui doit recevoir le son à stocker,
- un deuxième pointeur d'adresse permettant lors de la lecture de la mémoire intermédiaire de retrouver une case mémoire où se trouve chaque son à émettre,
- un troisième pointeur pour pointer successivement sur le support des sons successifs à prélever qui doivent être stockés dans la mémoire intermédiaire, et
- un système de gestion pour coordonner les trois pointeurs,
caractérisé en ce qu'il comporte:
- un circuit pour décaler le troisième pointeur en fonction d'une succession d'images projetées du film et pour mesurer un décalage résultant de cette succession d'images projetées au fur et à mesure de cette projection,
- des moyens pour faire sauter le troisième pointeur afin qu'il adresse, avec un saut dans la succession d'images, un prochain son à prélever du support si ce saut doit être plus grand qu'un seuil prédéterminé.

L'invention sera mieux comprise à la lecture de la description qui suit et à l'examen des figures qui l'accompagnent. Celles-ci ne sont données qu'à titre indicatif et nullement limitatif de l'invention. Les figures montrent
- figure 1: un dispositif de reproduction du son conforme à l'invention;
- figure 2: un exemple de compression et de décompression du-son pour convenir à la mise en oeuvre de l'invention.

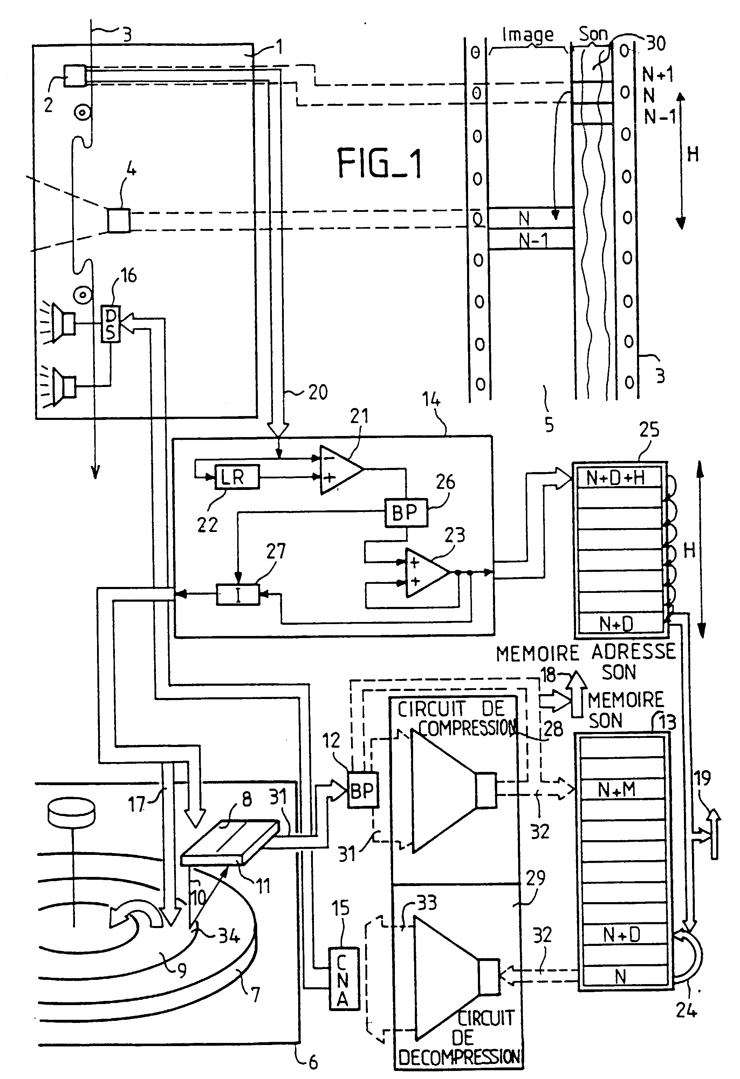

La figure 1 montre schématiquement, dans un projecteur 1 de cinéma, un détecteur 2 d'un signal 30 de synchronisation placé sur une bande son d'un film 3 et une lampe 4 de projection pour projeter des images contenues sur une bande image 5 du même film. Le détecteur du signal de synchronisation est placé en amont de la lampe 4 par rapport au sens du défilement du film 3. Le décalage qui résulte de cette position en amont du détecteur 2 est noté H sur la représentation schématique du film 3. Conformément à l'enseignement du document cité ci-dessus, on utilise, aussi, un autre système de lecture: par exemple de préférence un système 6 de lecture d'un disque laser 7. Cet autre système 6 géré par un système de gestion 14 comporte dans cet exemple préféré une source laser 8 éclairant une piste optique 9 du disque 7. Le signal d'éclairement 10 est détecté par une cellule 11. Le système de l'invention comporte également une mémoire 13 pour enregistrer les sons, un circuit de compression 28 et un circuit de décompression 29. Cette mémoire est gérée par le système de gestion 14 qui permet de lire les sons sur le disque laser 7 en avance par rapport au passage des images correspondantes du film. Dans un exemple, le disque laser 7 est un disque de type magnétooptique.

D'après le document WO 90/14614. au moment où l'on projette sur l'écran l'image N, on lit sur le disque 7 non pas le son N mais le son N+M. Le système de gestion 14 provoque le stockage du son N+M dans la mémoire 13. Ce stockage se produit dans la mémoire 13 à une adresse désignée par un pointeur 18 d'adresse en écriture. Ce son est stocké au moins temporairement, et il est prélevé ultérieurement. Si tout se passe bien, c'est à dire s'il n'y a pas de coupure, la durée de stockage du son N+M dans la mémoire 13 est égale au temps nécessaire pour projeter M images. Ainsi, au moment où l'on projette une image N+M, on prélève de la mémoire 13 le son N+M enregistré préalablement. La mémoire 13 est une mémoire de type tournante, c'est à dire que les cases mémoire où ont été prélevés des sons à diffuser sont à nouveau disponibles pour stocker temporairement des futurs sons à diffuser.

En revanche, les choses se passent différemment lorsque le film a été coupé. Lors d'une coupure de D images (les images N+1 à N+D ont été enlevées) un pointeur 19 de lecture de la mémoire 13 adresse non pas la case mémoire correspondant au son N+1 mais celle du son N+D+1. Il permet d'ignorer les sons compris entre N+1 et N+D et enregistrés auparavant dans la mémoire. Ainsi, la coupure a provoqué un saut 24 du pointeur 19 (de N+1 à N+D+1) alors que le pointeur 18 avait provoqué l'enregistrement dans la mémoire 13 de tous les sons N+1 à N+D.

Toujours d'après le document WO90/14614, le son lu 31 sur le disque 7, est constitué d'une suite de mots binaires. En considérant une fréquence d'échantillonnage de 48KHz, on obtient par seconde 48 000 mots de 16 bits (soit un mot toutes les 20µS). Chacun de ces mots est stocké dans une case mémoire de la mémoire 13. Si on fixe à dix secondes la durée maximum des coupures, il faut utiliser une mémoire de 480 kilomots ce qui est à exclure pour des raisons de coûts. En effet, le saut du pointeur 19 doit être inférieur en amplitude au contenu potentiel de la mémoire 13.

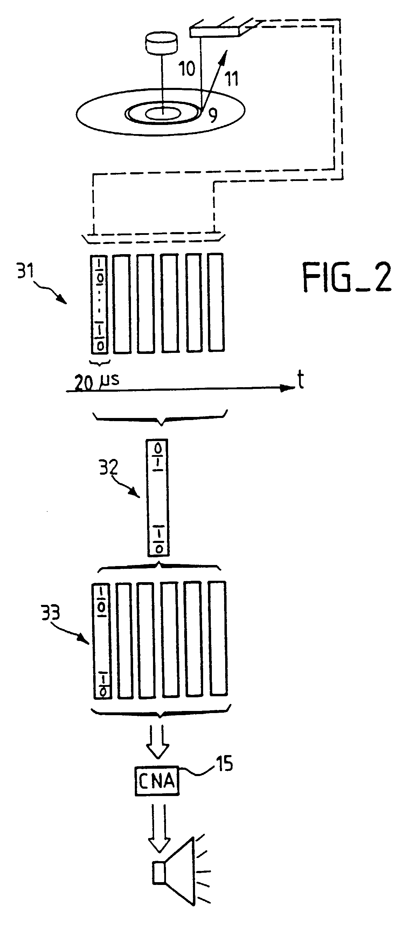

Pour remédier à ces inconvénients de taille de mémoire, on a utilisé un circuit 28 de compression. La figure 2 montre comment le son numérique est comprimé, stocké dans la mémoire 13, puis décomprimé. Ce circuit comprime le son numérique 31, par exemple obtenu après lecture de ce son sur le disque 7. Le circuit 28 utilise, par exemple, un taux de compression de six. C'est à dire que l'on code en un seul mot 32 une suite de six mots 31 lus sur le disque 7. Ce mot 32 est, ensuite, stocké dans la mémoire 13 Pour sa diffusion, il est pointé par le pointeur de lecture 19 afin d'être lu depuis cette mémoire au moment opportun pour être décomprimé par un circuit 29 de décompression. C'est à dire que ce mot 32 enregistré auparavant dans la mémoire 13 est décodé par ce dernier circuit 29 pour obtenir une suite de six mots 33, identique à celle 31 lue sur le disque, et qui est transmise à un convertisseur numérique analogique 15 ( CNA ) afin d'être diffusée par un dispositif 16 d'effets acoustiques. Ainsi, pour stocker dix secondes de son, on utilise non pas une mémoire de 480 kilomots mais de 80 kilomots ce qui représente un gain considérable.

L'invention permet, aussi, d'utiliser un disque 7 sur lequel des sons 34 sont déjà comprimés. Dans ce cas, ces sons 34 ne traversent pas le circuit 28 de compression. Ils sont directement stockés dans la mémoire 13. Puis, au moment où ils sont lus dans la mémoire, ils sont transmis au circuit de décompression 29 pour y être décodés. A cette fin, un circuit d'aiguillage 12 actionné manuellement ou capable de détecter si les sons lus sur le disque sont déjà comprimés, permet, soit de mettre en oeuvre le circuit de compression 28, soit de l'ignorer. Pour stocker des sons comprimés sur le disque, on utilise des sons originaux, on les comprime avec le circuit 28 et on l'enregistre sur le disque 7 sous la forme comprimée.

Un problème peut se poser néanmoins par le fait que le pointeur de lecture 19 adresse un mot codé 32 contenu dans une case mémoire et non un son. En effet, lorsque l'on coupe les images N+1 à N+D, le pointeur 19 de lecture de la mémoire 13 adresse, après un saut 14 de D/6 cases mémoire, la case mémoire où se situe son N+D+1. Puis, le contenu de cette case mémoire est décodé en six mots 33 qui représentent six sons parmi lesquels se trouvent le son N+D+1. Or, parmi ces six sons, on ne sait lequel correspond au son N+D+1. En effet, il n'y a aucune raison que la longueur de la coupure soit un multiple de six images. L'invention résout ce problème en émettant systématiquement les six sons décomprimés. Ceci provoque au maximum un décalage de 120µS (6*20µS; 20µs représentant la période d'échantillonnage). Le décalage est totalement imperceptible à l'oreille. De ce fait, l'inconvénient peut être ignoré.

Ces circuits 28 et 29 utilisent par exemple un algorithme du type WB 48SC du CCETT (Centre Commun d'Etudes de Télécommunication et de Télédiffusion, Rouen, France) décrit entre autre dans un article de M de Hery intitulé "A Digital audiobroadcasting system for mobile reception" et publié dans la revue "Les proceedings de I.T.U. COM" (International Telecom Union Communication). Cet algorithme est notamment mis en oeuvre dans la carte PCX3 vendue par la société Digigram, Grenoble, France. Cette carte comporte des circuits tels que les circuits 28 et 29 ci-dessus.

Comme nous l'avons vu plus haut, du fait que la mémoire 13 stocke au maximum dix secondes de son, il résulte que l'on ne peut effectuer des coupures supérieures à cette durée. Pour remédier à ces inconvénients, on utilise dans l'invention un pointeur 17 adressant des sons sur le disque et capable, si la durée de la coupure est supérieure à dix secondes, d'éviter de lire et de stocker certains sons qui de toute façon ne seront pas diffusés.

Supposons que l'on ait coupé sur la bande du film les images comprises entre N+1 et N+D-1. Par cette opération, on a, aussi, supprimé les adresses des sons N-H+1 à N+D-H+1 du signal de synchronisation.

A la date N-H, c'est à dire à celle correspondant à la projection sur l'écran de l'image N-H, on lit depuis la mémoire 13 le son N-H enregistré auparavant. Simultanément, une adresse correspondant au son N-H présente sur le signal 30 de synchronisation est détectée par le détecteur 2 qui envoie un signal d'adresse 20 du son N-H dans un codeur d'adresse. En simplifiant, ce codeur d'adresse peut comporter un premier soustracteur 21 à deux entrées. Une première entrée positive reçoit directement l'adresse son N-H tandis qu'une deuxième entrée négative reçoit l'adresse son précédente N-H-1. Pour que les adresses soient présentées ensemble, l'adresse son précédente N-H-1 passe par exemple dans une ligne à retard 22.

En temps normal, quand il n'y a pas de coupure, ce qui est le cas au temps N-H, les deux adresses présentent un incrément unitaire. Cet incrément est envoyé dans une première entrée d'un additionneur 23 qui reçoit, sur une deuxième entrée en bouclage, son signal de sortie précédent. En conséquence, l'additionneur 23 délivre maintenant une adresse incrémentée d'un cran par rapport à l'adresse qu'il produisait précédemment. Cette adresse est utilisée par exemple pour faire évoluer selon la flèche 19 le pointeur 19 d'adresse de lecture de la mémoire 13.

Ensuite, à la date N-H+1, on projette sur l'écran l'image N-H+1, on lit et on diffuse le son N-H+1 stocké auparavant dans la mémoire 13. A cette même date, on lit le son N-H+M+1 sur le disque. Puis la coupure se présente. Le détecteur 2 envoie au premier soustracteur 21 un signal adresse son 20 correspondant non pas au son N-H+1 mais au son N+D-H. Cette adresse se trouve comparée à la précédente, soit N-H. Le soustracteur 21 présente alors un incrément de D. Cet incrément vient s'additionner dans l'additionneur 23 à l'adresse précédente N. On obtient une adresse N+D. Ce saut de l'adresse de N à N+D provoque un saut de lecture 24 de la mémoire 13 de telle façon que les sons inutiles, de N+1 à N+D-1, ne soient pas diffusés.

Mais ce saut 24 ne doit pas s'effectuer maintenant. Il faut attendre d'être en présence de l'image N. C'est pourquoi, dans un exemple, on utilise une mémoire 25 qui stocke, pendant une durée H, les adresses issues de l'additionneur 23. La mémoire 25 est aussi de préférence une mémoire tournante. Ainsi, à la sortie de la mémoire 25, c'est à dire au temps N, l'adresse N+D, stockée à la date N-H+1 dans la mémoire 25, provoque le saut de lecture 24 du son N à N+D préalablement enregistrés dans la mémoire 13.

Dans le cas où l'incrément D issu, à la date N-H+1, du soustracteur 21 est supérieur à la taille de la mémoire M, le saut 24 de N à N+D ne peut s'effectuer parce que l'on n'a toujours pas stocké, dans la mémoire 13, le son N+D. Pour remédier à cet inconvénient, on utilise un circuit d'aiguillage 26 qui, si l'incrément D issu du soustracteur 21 est supérieur à M, actionne un interrupteur 27. Le circuit d'aiguillage 26 est ainsi essentiellement muni d'un comparateur qui compare l'incrément d'adresse D à une valeur de seuil S. La valeur de seuil S est déterminée en fonction de la capacité maximale de stockage M de la mémoire 13 (avec ou sans compression selon le cas). L'interrupteur 27 permet de connecter la sortie de l'additionneur 23 à une commande du pointeur 17 (non représentée sur la figure). Cette commande peut être par exemple un registre relié au pointeur 17 et comportant une entrée de forçage utilisée lors d'une coupure. L'interrupteur 27 peut alors laisser passer l'adresse N+D issue de l'additionneur 23 à la fois vers la mémoire 25 et vers le système de lecture. Cette adresse agit sur le pointeur de lecture du disque 17 pour qu'il puisse pointer sur le disque, à une date ultérieure, le son N+D.

A la date N-H+2, le pointeur de lecture 17 alors qu'il pointait à la date précédente le son N-H+M+1, se décale et, au lieu de lire le son suivant, pointe pour lire sur le disque le son N+D. On ne lit donc pas le son N-H+M+2. Ceci est normal car il se situe après le son N et avant le son N+D. En effet, sachant d'une part que H dure un peu plus d'une demi seconde, et M environ dix secondes, on obtient bien N-H+M+2 > N et sachant d'autre part que la coupure D est supérieure à la taille M de la mémoire 13, on obtient bien -H+M+2 < D et par conséquent N-H+M+2 < N+D.

L'opération de pointage du pointeur 17 et de lecture ne s'effectue pas immédiatement, elle dure environ 70ms. Pendant ce temps de montée de la mise en lecture du disque, d'une part, on enregistre du blanc dans la mémoire 13, d'autre part, on continue de prélever de cette mémoire les sons correspondant aux images qui défilent. On peut, bien sûr, au lieu d'enregistrer du blanc dans la mémoire 13, arrêter le déroulement du pointeur d'écriture 18 ce qui est équivalent.

Une fois la mise en lecture effectuée, soit 70ms après, on enregistre dans la mémoire 13 le son N+D. Puis, à la date N+1, au moment où la mémoire 25 envoie vers la mémoire 13 l'adresse son N+D stockée à la date N-H+1, le pointeur 19 de lecture de la mémoire 13 effectue le saut 24 pour lire le son N+D. Grâce au fait que la durée H dure un peu plus d'une demi seconde et qu'elle est supérieure au temps de montée de 0ms, l'enregistrement du son N+D qui se réalise à la date N-H+70ms, s'effectue donc avant que le saut ne se produise, c'est à dire à la date N.

Au moment de la lecture, tout se passe comme si fictivement la taille de la mémoire 13 avait été augmentée d'un volume correspondant aux sons qui n'ont pas été lus sur le disque. L'adressage de la mémoire 13, avec les décomptes nécessaires, suit alors la présentation des images.

## Revendications

1. Dispositif (1,6,13,14) de reproduction du son haute fidélité d'un film sonorisé de cinéma, au cours de la projection de ce film, comportant:
- un système (6) de lecture du son sur un support (7) autre que le film,
- un système de diffusion (1) du son,
- une mémoire intermédiaire,
- un premier pointeur (18) d'adresse permettant, lors du stockage du son dans des cases mémoires de cette mémoire intermédiaire (13), de connaître la position d'une case mémoire qui doit recevoir le son à stocker,
- un deuxième pointeur (19) d'adresse permettant lors de la lecture de la mémoire intermédiaire (13) de retrouver une case mémoire où se trouve chaque son à émettre,
- un troisième pointeur (17) pour pointer successivement sur le support (7) des sons successifs à prélever qui doivent être stockés dans la mémoire intermédiaire (13), et
- un système (14) de gestion pour coordonner les trois pointeurs (17,18,19),
caractérisé en ce qu'il comporte:
- un circuit pour décaler le troisième pointeur en fonction d'une succession d'images projetées du film et pour mesurer un décalage résultant de cette succession d'images projetées au fur et à mesure de cette projection,
- des moyens (26,27) pour faire sauter le troisième pointeur (17) afin qu'il adresse, avec un saut dans la succession d'images, un prochain son à prélever du support (7) si ce saut doit être plus grand qu'un seuil prédéterminé.

2. Dispositif selon la revendication 1, caractérisé en ce qu'il comporte:
- des moyens (28) pour comprimer ce dit son,
- des moyens pour stocker sous la forme comprimée dans la mémoire intermédiaire le son lu sur le support (7),
- des moyens (29) pour décomprimer le son stocké dans la mémoire (13) afin de l'émettre,
- un système (14) de gestion pour gérer les moyens de compression (28) et de décompression (29).

3. Dispositif selon l'une quelconque des revendications 1 à 2, caractérisé en ce que les moyens (28) de compression comportent un circuit permettant de comprimer le signal (31) lu sur le support (7) afin de stocker dans la mémoire intermédiaire (13) plusieurs sons dans une case mémoire.

4. Dispositif selon l'une quelconque des revendications 1 à 3 caractérisé en ce qu'il comporte des moyens de compression 28 permettant de stocker le son sous une forme comprimée sur le support (7).

5. Dispositif selon l'une quelconque des revendications 1 à 3 caractérisé en ce que les moyens (29) de décompression comportent un circuit (29) permettant de décomprimer au fur et à mesure le contenu de chaque case mémoire de la mémoire (13) en plusieurs sons.

## Patentansprüche

1. Vorrichtung (1, 6, 13, 14) zum Wiedergeben des Tons eines Kino-Tonfilms mit hoher Klangtreue während des Projizierens des Films, mit:
- einem Lesesystem (6) zum Lesen des Tons auf einem von Film verschiedenen Träger (7),
- einem Tonausstrahlsystem (1),
- einem Zwischenspeicher,
- einem ersten Adreßzeiger (18), der es ermöglicht, beim Speichern des Tons in Speicherfeldern des Zwischenspeichers (13) die Position eines Speicherfeldes herauszufinden, das den zu speichernden Ton aufnehmen soll,
- einem zweiten Adreßzeiger (19), der es ermöglicht, beim Lesen des Zwischenspeichers (13) ein Speicherfeld wiederzufinden, in dem sich der auszustrahlende Ton befindet,
- einem dritten Zeiger (17) zum sukzessiven Zeigen auf sukzessiv auf dem Träger (7) zu lesende Töne, die in dem Zwischenspeicher (13) gespeichert werden sollen, und
- einem Verwaltungssystem (14) zum Koordinieren der drei Zeiger (17, 18, 19),
gekennzeichnet durch:
- eine Schaltung zum Verschieben des dritten Zeigers in Funktion einer Folge von projizierten Bildern des Films und zum Messen einer Verschiebung, die sich aus dieser Folge von projizierten Bildern im Laufe dieses Projizierens ergibt,
- Mittel (26, 27) zum Veranlassen des dritten Zeigers (17) zum Springen, damit er bei einem Sprung in der Bildabfolge einen nächsten vom Träger (7) zu lesenden Ton adressiert, wenn dieser Sprung größer sein soll als ein vorgegebener Grenzwert.

2. Vorrichtung nach Anspruch 1, gekennzeichnet durch:
- Mittel (28) zum Komprimieren des Tons,
- Mittel zum Speichern des auf dem Träger (7) gelesenen Tons in der komprimierten Form im Zwischenspeicher,
- Mittel (29) zum Dekomprimieren des im Zwischenspeicher (13) gespeicherten Tons, um ihn auszustrahlen,
- ein Verwaltungssystem (14) zum Verwalten der Kompressionsmittel (28) und Dekompressionsmittel (29).

3. Vorrichtung nach einem der Ansprüche 1 oder 2, dadurch gekennzeichnet, daß die Kompressionsmittel (28) eine Schaltung umfassen, die es ermöglicht, das auf den Träger (7) gelesene Signal (31) zu komprimieren, um in dem Zwischenspeicher (13) mehrere Töne in einem Speicherfeld zu speichern.

4. Vorrichtung nach einem der Ansprüche 1 bis 3, gekennzeichnet durch Kompressionsmittel (28), die es ermöglichen, den Ton in komprimierter Form auf dem Träger (7) zu speichern.

5. Vorrichtung nach einem der Ansprüche 1 bis 3, dadurch gekennzeichnet, daß die Dekompressionsmittel (29) eine Schaltung (29) umfassen, die es ermöglicht, im Laufe der Zeit den Inhalt einer jeden Speicherzelle des Speichers (13) in mehrere Töne zu dekomprimieren.

## Claims

1. Device (1,6,13,14) for reproducing high fidelity sound of a cinema film with a sound-track whilst this film is being projected, comprising:
- a system (6) for reading the sound on a medium (7) other than the film,
- a system for broadcasting (1) the sound,
- a buffer memory,
- a first address pointer (18) whereby a memory compartment which is to receive the sound to be stored can be distinguished as the sound is being stored in memory compartments of the buffer memory (13),
- a second address pointer (19) whereby a memory compartment in which each sound to be transmitted is located can be re-located when the buffer memory (13) is read,
- a third pointer (17) for pointing on the medium in succession to successive sounds to be sampled and which have to be stored in the buffer memory (13), and
- a management system (14) for coordinating the three pointers (17, 18, 19),
characterised in that it comprises:
- a circuit for shifting the third pointer as a function of a succession of projected images of the film and for measuring a shift resulting from this succession of projected images throughout this projection,
- means (26, 27) for causing the third pointer (17) to skip such that, by passing over the succession of images, it addresses a next sound to be sampled on the medium (7) if this skip has to be greater than a predetermined threshold.

2. Device as claimed in claim 1, characterised in that it comprises:
- means (28) for compressing this said sound,
- means for storing in the buffer memory in compressed form the sound read from the medium (7),
- means (29) for decompressing the sound stored in the memory (13) in order to emit it,
- a management system (14) for managing the compression (28) and decompression (29) means.

3. Device as claimed in any one of claims 1 to 2, characterised in that the compression means (28) have a circuit enabling the signal (31) read on the medium (7) to be compressed so that several sounds can be stored in a memory compartment of the buffer memory (13).

4. Device as claimed in any one of claims 1 to 3, characterised in that it has compression means 28 enabling the sound to be stored on the medium (7) in a compressed form.

5. Device as claimed in any one of claims 1 to 3, characterised in that the decompression means (29) have a circuit (29) enabling the contents of each memory compartment of the memory (13) to be progressively decompressed into several sounds.
